# EUROPEAN PATENT APPLICATION

(11) **EP 3 736 780 A1**
(43) Date of publication of application: **11.11.2020**
(21) Application number: 19382339.0
(22) Date of filing: 06.05.2019
(51) Int. Cl.: G07C 9/00, H04L 9/08, H04L 9/32

(54) **A METHOD FOR REMOTELY CONTROLLING FEATURES OF A DEVICE AND A REMOTE KEYLESS ENTRY INSTRUMENT**

(71) Applicant: Universitat Pompeu Fabra, 08002 Barcelona (ES)
(72) Inventor: DAZA FERNÁNDEZ, Vanesa, 08173 Sant Cugat del Vallès (ES); SALLERAS SOLER, Xavier, 17600 Figueres (ES)
(74) Representative: Juncosa Miró, Jaime

(57) **Abstract**

Present invention relates to methods for remotely controlling features of a device and to a remote keyless entry instrument. The method can be implemented for both RKE and PRKE systems and is robust against both jamming-and-replay attacks and relay attacks. Furthermore, the method mitigates the effectiveness of jamming-based deny-of-service attacks, thanks to the integration of a frequency-hopping approach. Moreover, the method is a one message protocol for RKE systems and a two messages protocol for PRKE systems, where both approaches use a hash function proved to have low CPU resources consumption. A remote keyless entry instrument having an element configured to get a current time is also provided.

## Description

### Technical Field

The present invention relates to a method for remotely controlling features of a device and to a remote keyless entry instrument such as a key fob. More in particular, the invention provides a lightweight method which guarantees the integrity and validity of the authentication in Remote Keyless Entry (RKE) systems, protecting the communication against the well-known jamming-and-replay and relay attacks, without using complex cryptographic schemes. The invention is also usable for passive RKE (PRKE) systems.

### Background of the Invention

The usage of RKE systems has been increasing over the years, being them widely used to remotely lock and unlock cars, garage doors, sensors, doorbells or alarms. The first RKE systems used a simple protocol; where a code was sent in plaintext to a receiver which had to execute a command, e.g. unlock a door. However, as sniffing and replaying the code was enough to be able to unlock such a door, a new scheme called rolling codes was developed, and it is still widely used nowadays. Such scheme pretends to be secure so the key fob computes and sends a new code each time it is used, and each code is accepted by the receiver just once. Even so, it has been proved that rolling codes are vulnerable to different attacks.

An important contribution on the topic has been recently done in [1]. They demonstrate as the jamming-and-relay attacks are nowadays still effective against a wide variety of modern cars, by making use of two units of a non-expensive radio frequency device.

Many secure schemes [2], [3] have been designed to increase the security of RKE and PRKE systems. The main problem they present is their complexity, so they use cryptographic schemes which are hard to implement into cheap key fobs. Another solution [4] proposes a 2-factor authentication scheme achieving good results, but with the inconvenient of having to add a microphone into the fob, which increases its complexity. On the other hand, some schemes [5] have been proved to be both simple and effective against relay attacks. One of them, proposed in [6], demonstrates that a protocol calculating the time between message exchanges can determine if a relay attack is being performed against a PRKE or not.

Some patents and patent application are also known in the field.

US 20100085160-A1 provides systems and methods for utilizing zero-power, energy-harvesting computational modules to provide secure and reprogrammable wireless communications with vulnerable devices comprising integrated circuits (ICs), including active implantable medical devices, electronic lock and key systems, credit cards, access cards, identification cards and passports. The zero-power, energy-harvesting computational modules are powered by radio signals received from an interrogator, and requests from the interrogator are authenticated using an encrypted challenge-response mechanism. Communications between the interrogator and the vulnerable device are enabled if the interrogator requests have been authenticated, thus preventing unauthorized requests from reaching the vulnerable device.

US 9902368-B2 discloses a system for providing dynamic access to a vehicle via a plurality of devices. A device and/or a server of an authentication network stored fob data relating to one or more key fobs linked to the vehicle, and device data that includes data relating to one or more devices linked to the key fob that are authorized to access the vehicle. The vehicle receives an access request indicating that a new device is requesting access to the vehicle, whereupon a challenge may be transmitted to one or more of the authorized devices. The one or more devices may respond, granting access to vehicle functions. The vehicle and/or authentication network generate a secure fob key and access limitations based on the response and transmit the secure fob key to the new device. Profile templates may be used to set and control vehicle access and functions.

US 9218700-B2 provides a system that includes a wireless communication device (or end device), a vehicle having a central module, and a key provisioning server. The key provisioning server is communicatively coupled to the wireless communication device and the central module via wireless connections. The central module can establish a wireless connection with the wireless communication device to initiate a current communication session. When the wireless connection is established with the central module, the wireless communication device communicates a request message to request temporary security information (e.g., public key and/or a digital certificate). The key provisioning server can then provide, in response to the request message, the temporary security information to the wireless communication device and/or the central module. The temporary security information can then be used to encrypt communications between the wireless communication device and the central module.

More solutions are therefore needed for RKE and PRKE systems in order to solve the security issues present into these systems.

### References:

[1] Omar Adel Ibrahim, Ahmed Mohamed Hussain, Gabriele Oligeri and Roberto Di Pietro. Key Is In The Air: Hacking Remote Keyless Entry Systems - Proc. of the International Workshop on Cyber Security for Intelligent Transportation Systems (CSITS2018).
[2] X. Lv and L. Xu. AES encryption algorithm keyless entry system - 2012 2nd International Conference on Consumer Electronics, Communications and Networks (CECNet).
[3] T. Glocker, T. Mantere and M. Elmusrati. A protocol for a secure remote keyless entry system applicable in vehicles using symmetric-key cryptography - 2017 8th International Conference on Information and Communication Systems (ICICS).
[4] Wonsuk Choi Minhye Seo and Dong Hoon Lee. Sound-Proximity: 2-Factor Authentication against Relay Attack on Passive Keyless Entry and Start System - Journal of Advanced Transportation 2018.
[5] H. Jeong and J. So. Channel correlation-based relay attack avoidance in vehicle keyless-entry systems - Electronics Letters 2018.
[6] Aurélien Francillon, Boris Danev and Srdjan Capkun. Relay Attacks on Passive Keyless Entry and Start Systems in Modern Cars - Cryptology ePrint Archive, Report 2010/332.

### Description of the Invention

According to a first aspect there is provided a method for remotely controlling features of a device for both RKE and PRKE systems. The proposed method is robust against both jamming-and-replay attacks and relay attacks; furthermore, the proposed method mitigates the effectiveness of jamming-based Deny-of-Service (DoS) attacks, thanks to the integration into the method of a frequency-hopping approach.

According to a first embodiment, in particular for RKE systems, the proposed method comprises providing to a device and to a remote keyless entry instrument linked to the device a randomly generated secret key of a certain length. The remote keyless entry instrument and the device have an element configured to get a current time such as a real-time clock, among others. Then, a given frequency channel through which the device and the remote keyless entry instrument are going to communicate with each other is set. The remote keyless entry instrument, upon activation thereof, computes a hash value using the cited secret key and a current remote keyless entry instrument timestamp, and then sends to the device, over said given frequency channel, the computed hash value along with said remote keyless entry instrument timestamp and with a given feature command to be performed by the device. The device upon said reception checks whether a difference between the remote keyless entry instrument timestamp and a current device timestamp is lower than or equal to a threshold and if the received hash value is correct, allowing the execution of the feature command only if both previous conditions are true.

According to a second embodiment, in particular for PRKE systems, the proposed method comprises providing to a device and to a remote keyless entry instrument linked to the device a randomly generated secret key of a certain length. The remote keyless entry instrument has an element configured to get a current time such as a real-time clock, among others. The device also comprises or has access to an element to get a current time. Then, a given frequency channel through which the device and the remote keyless entry instrument are going to communicate with each other is set. The device then sends a synchronization message to the remote keyless entry instrument, over said given frequency channel, and at the moment said synchronization message is sent, starts to calculate a message exchanging time. The synchronization message is sent upon the device detects an event and includes an identifier of the device. At that point, the remote keyless entry instrument computes a hash value using the cited secret key with and a remote keyless entry instrument timestamp, and sends the computed hash value to the device. As soon as the device receives the computed hash it stops the calculation of the message exchanging time, and checks whether the message exchanging time is lower than or equal to a threshold and if the received hash value is correct. If both previous conditions are true, said feature command is executed at the device.

According to the proposed method, the device may be a vehicle, a garage door, a doorbell or an alarm, among others, and the feature command may comprise locking/activating or unlocking/deactivating said vehicle, garage door, doorbell or alarm. Likewise, the remote keyless entry instrument may be an active or a passive key fob.

According to said second embodiment, the synchronization message is sent upon a triggering of a handle of the device. Alternatively, the device may continuously check whether the remote keyless entry instrument is within a certain reading range, such that said synchronization message is sent once the device has detected that the remote keyless entry instrument is within the reading range. Moreover, it can happen that the remote keyless entry instrument timestamp comprises an error, the latter being preferably comprised within a range between 10 and 20 seconds.

The hash function may comprise a Blake2 hash function, in particular a Blake2s version of said Blake2 hash function. It should be noted that other lightweight hash functions can be equally used, for example xxHash, among others. The randomly generated secret key preferably is a 256-bits key.

According to a second aspect there is also provided a remote keyless entry instrument such as an active or a passive key fob.

In an embodiment, the remote keyless entry instrument comprises one or more physical and/or virtual buttons, an element configured to get a current time, a memory to store a randomly generated secret key of a certain length, one or more processors to compute, upon an activation of at least one of said buttons, a hash value using the secret key and a current remote keyless entry instrument timestamp, and a communication unit to send to a device, for example a vehicle or a door, among others, over a previously set given frequency channel, a message including the computed hash value along with said remote keyless entry instrument timestamp and with a given feature command to be performed by the device. So that, responsive to the reception of said message, the device can check whether a difference between the remote keyless entry instrument timestamp and a current device timestamp is lower than or equal to a threshold and if the received hash value is correct and execute the feature command if both previous conditions are true.

In another embodiment, the remote keyless entry instrument comprises one or more physical and/or virtual buttons, an element configured to get a current time, a memory to store a randomly generated secret key of a certain length, a communication unit to communicate with a device over a given previously set frequency channel, and one or more processors to compute, upon reception of a synchronization message including an identifier of the device, a hash value using the secret key and a current remote keyless entry instrument timestamp. So that, the device, responsive to the reception of a message including said hash value from the remote keyless entry instrument, can stop the calculation of a message exchanging time and can check whether the calculated message exchanging time is lower than or equal to a threshold and if the received hash value is correct, and execute a feature command if both previous conditions are true.

### Brief Description of the Drawings

The previous and other advantages and features will be more fully understood from the following detailed description of embodiments, with reference to the attached figures, which must be considered in an illustrative and non-limiting manner, in which:
Fig. 1 is a flow chart illustrating a method for remotely controlling features of a device, according to a first embodiment of the present invention.
Fig. 2 schematically illustrates in more detail the actions executed by the device and by the remote keyless entry instrument according to said first embodiment of Fig. 1.
Fig. 3 shows an example of a message sent by the remote keyless entry instrument to the device.
Fig. 4 is a flow chart illustrating a method for remotely controlling features of a device, according to a second embodiment of the present invention.
Fig. 5 schematically illustrates in more detail the actions executed by the device and by the remote keyless entry instrument according to said second embodiment of Fig. 4.
Fig. 6 shows an example of the synchronization message sent by the device to the remote keyless entry instrument.

### Detailed Description of Preferred Embodiments

Present invention provides a method for both RKE and PRKE systems. The method is implemented by a device 100 such as a vehicle, a garage door, a doorbell, an alarm, etc. and a remote keyless entry instrument 200 associated to the device 100. The device 100 has a device identification number device_{id} and comprises or has access to an element to get a current time. The remote keyless entry instrument 200, for example a key fob, preferably includes one or more physical and/or virtual buttons, an element to get a current time, a memory, one or more processors, one or more batteries and a communication unit. Said element can be a real-time clock, synchronized through a GPS module or similar (i.e. through the Internet using a SIM card or using a standard-frequency radio station).

First, both the remote keyless entry instrument 200 and the device 100 have to agree on a randomly generated secret key *sk* large enough to make brute-force attacks hard to accomplish, for example a 256-bits key, among others. Moreover, for both RKE and PRKE systems, a hash function is also computed. The hash function should be lightweight in order to optimize timings and resources consumption. A particular hash function that can be used by the proposed method is the Blake2 hash function, preferably its Blake2s version, which guarantees a low power and low computing resources consumption. However it should be noted that other lightweight hash functions can be also used. By using these lightweight hashes the costs in implementing the proposed method is decreased, and the fast draining of the battery/batteries of the remote keyless entry instrument 200 is avoided.

Besides, the proposed method also performs a frequency-hopping protocol where a frequency channel that is going to be used to transmit the messages changes each preconfigured period of time. This means that both remote keyless entry instrument 200 and device 100 must agree on the same frequency channel that they are going to use to communicate with each other.

In an embodiment, the frequency-hopping for a specific endpoint (i.e. the remote keyless entry instrument 200 or the device 100), which has a number of available frequency channels N_{c} is set as follows. Each period of time (previously agreed by both remote keyless entry instrument 200 and device 100) the endpoint gets the current datetime in a timestamp form, sums the secret key *sk* to it and calculates its hash. Then, the endpoint calculates the frequency channel, which is the modulo of the integer representation of the hash.

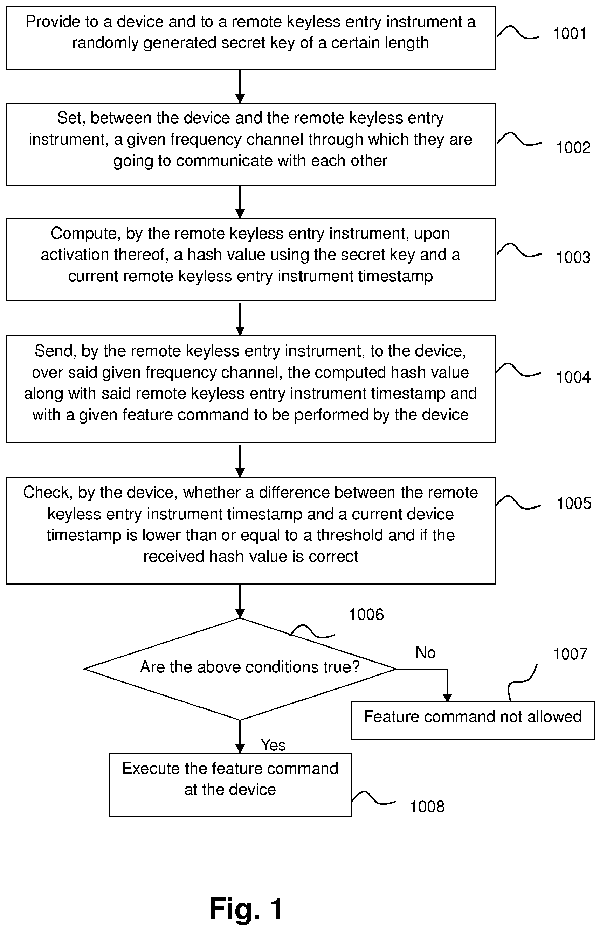

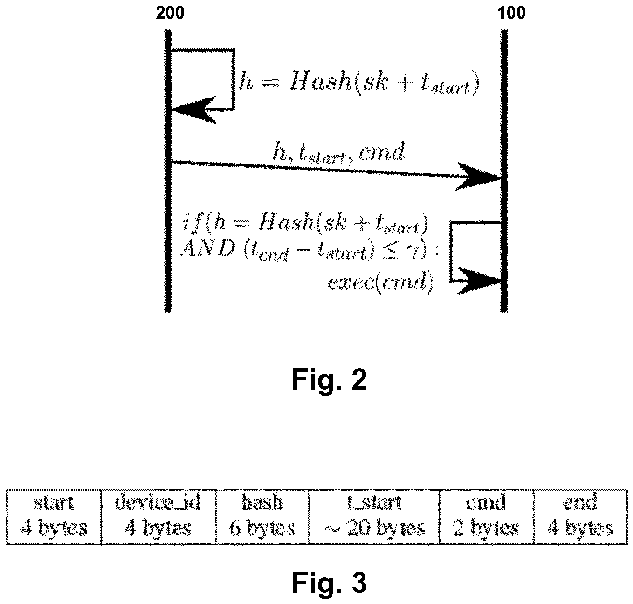

With reference to Figs. 1 and 2, therein it is shown a first embodiment of a method for remotely controlling features of a device 100, in particular for RKE systems. In this case, at step 1001, the method comprises providing to the device 100 and to a remote keyless entry instrument 200 linked to the device 100 a randomly generated secret key *sk* of a certain length. Then, at step 1002, the method comprises setting between the device 100 and the remote keyless entry instrument 200 a given frequency channel through which they are going to communicate with each other. This is done by the device 100 continuously performing the cited frequency-hopping protocol and by the remote keyless entry instrument 200 performing it just before starting next step 1003. At step 1003, the remote keyless entry instrument 200 upon activation thereof (i.e. by for example pressing one of its buttons corresponding to the feature command *cmd to* be performed by the device 100, for example lock it or unlock it) computes a hash value using the secret key *sk* and a current remote keyless entry instrument timestamp tₛₜₐᵣₜ, and sends to the device 100, step 1004, the computed hash value along with said remote keyless entry instrument timestamp tₛₜₐᵣₜ and with said given feature command *cmd to* be performed by the device 100. At step 1005, the device 100 checks whether a difference between the remote keyless entry instrument timestamp tₛₜₐᵣₜ and a current device timestamp t_{end} is lower than or equal to a threshold γ and if the received hash value is correct (i.e. by taking the current timestamp t_{end} and the secret key *sk* the device 100 computes a hash value and checks whether this computed hash coincides with the received hash value). If both previous conditions are true, step 1008, the feature command *cmd* is executed by the device 100. Otherwise, step 1007, the feature command *cmd* is not executed.

Fig. 3 shows an example of the message sent by the remote keyless entry instrument 200 to the device 100. *Start* and *end* are always 4 identical bytes placed at the beginning and at the end of the message, to make it easier for the device 100 to catch it. Furthermore, the method keeps being performed while the user retains the button pressed; meaning this that messages are sent continuously till the button is released. Even by pressing and releasing the button quickly around 6 messages are sent on average. This is done on purpose, like is done in regular RKE systems, to avoid having to press more than once if the device 100 is not able to catch the message the first time, due to random hardware errors. Finally, once the device 100 receives and verifies the message hash and the timestamps, it executes the feature command *cmd.*

By computing and sending said unique hash value the method prevents jamming-and-replay in RKE. Moreover, by establishing said threshold γ, which is the maximum amount of time a message should take going from the remote keyless entry instrument 200 to the device 100, relay attacks in RKE are also prevented. In this scenario, if a message took an amount of time (t_{end} - tₛₜₐᵣₜ) higher than the threshold γ, it can be said that the remote keyless entry instrument 200 is placed further from the device 100 than what it should be, and that the method is performed by means of a relay attack, using an LTE network or similar.

Likewise, the proposed method prevents DoS attacks in RKE by any of the endpoints performing the above-described frequency-hopping protocol. They both have a range of frequency channels available to perform the protocol, and the aim is to agree on a frequency channel without and attacker being able of knowing it. The purpose is to change the transmitting frequency channel each short period of time (for example, 5-20 seconds). By doing this, an attacker willing to perform a DoS attack will have to jam a wide range of frequencies at the same time. It can be done by means of several jamming devices, which is an expensive investment.

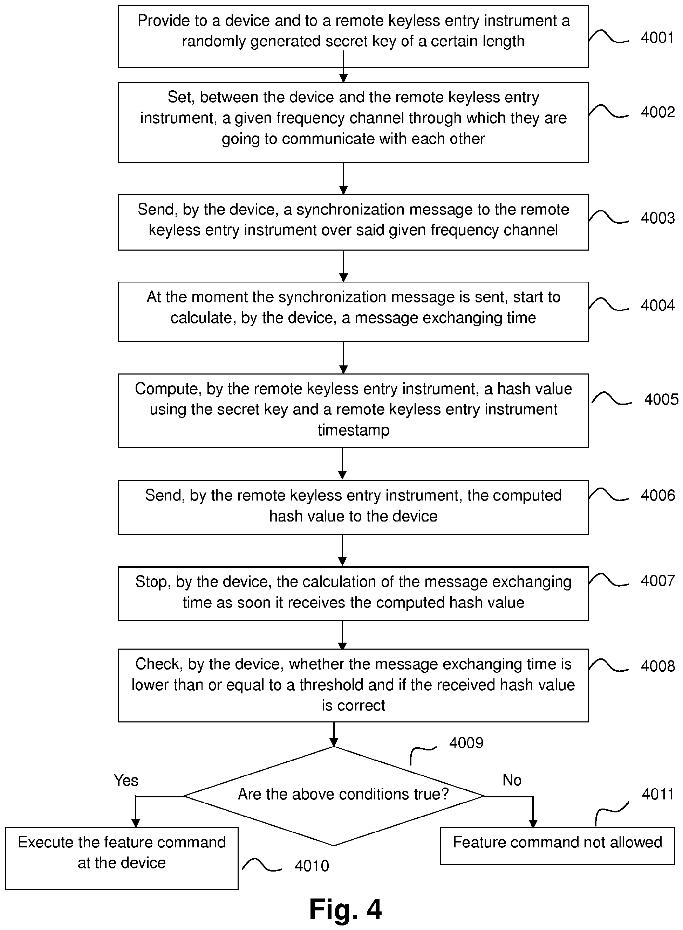

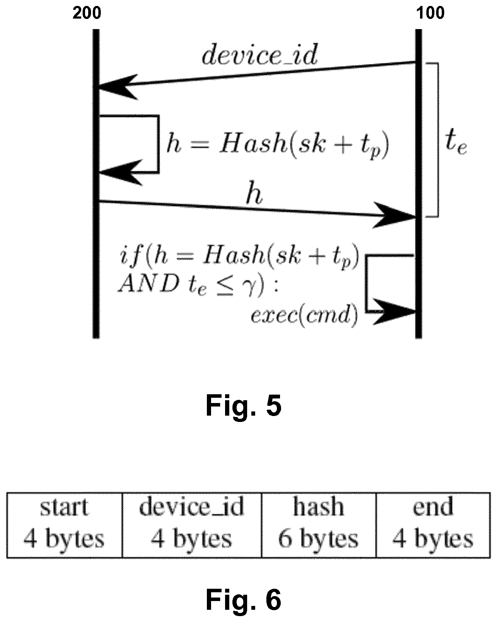

With reference now to Figs. 4 and 5, therein it is shown a second embodiment of a method for remotely controlling features of a device 100, in particular for PRKE systems. At step 4001, the method comprises providing to the device 100 and to a remote keyless entry instrument 200 linked to the device 100 a randomly generated secret key *sk* of a certain length. Then, at step 4002, the method comprises setting between the device 100 and the remote keyless entry instrument 200 a given frequency channel through which they are going to communicate with each other. In this case, this is done by the remote keyless entry instrument continuously performing the cited frequency-hopping protocol. At step 4003, the device 100, for instance upon a triggering of a handle thereof or once the device has detected that the remote keyless entry instrument 200 is within a certain reading range (e.g. 1 meter, 10 meters, or others), sends a synchronization message to the remote keyless entry instrument 200, over said given frequency channel, and starts to calculate, step 4004, a message exchanging time tₑ. The synchronization message includes the identifier of the device. At step 4005, the remote keyless entry instrument 200 computes a hash value using the secret key *sk* and a remote keyless entry instrument timestamp tₚ, and sends, step 4006, the computed hash value to the device 100. Once the hash value is received the device 100, step 4007, stops calculating said message exchanging time tₑ, and checks, step 4008, whether the message exchanging time tₑ is lower than or equal to a threshold γ and if the received hash value is correct (as well as for the RKE case described above). If both previous conditions are true, step 4010, the feature command is executed by the device 100. Otherwise, step 4011, the feature command is not executed.

Fig. 6 shows an example of the synchronization message sent by the device 100 to the remote keyless entry instrument 200. In this case, hash is null. As it happens with the implementation of the method for RKE, the device 100 keeps sending messages while is receiving the input from the user (i.e. while the user is pulling the device handle) or while the device 100 continues detecting the remote keyless entry instrument 200 within the reading range, in order to guarantee the performance of the method. Once the remote keyless entry instrument 200 receives the synchronization message, it replies with a new message, this time with the hash field filled. The device 100 receives the message and after verifying its hash and the timestamps, it executes the specified feature command *cmd.*

In the second embodiment, by computing and sending said unique hash value the method also prevents jamming-and-replay. Moreover, the method also prevents relay attacks in PRKE because of said calculation of the message exchanging time tₑ, which is the value it takes a message to go to the remote keyless entry instrument 200, plus a response message to go back to the device 100. By placing the remote keyless entry instrument 200 next to the device 100 or by pulling the handle of the device 100, the method can calculate an estimated value γ, which is the threshold the method should never surpass. If a message took an amount of time tₑ higher than γ, it can be said that the remote keyless entry instrument 200 is placed further from the device 100 than what it should be, and that the method is performed by means of a relay attack. As in this case is the device 100 who calculates tₑ, the remote keyless entry instrument 200 will not be required to calculate the current timestamp tₛₜₐᵣₜ, thus the method will be less time and power consuming for it.

For PRKE systems, the method also prevents DoS attack essentially like in RKE systems.

The scope of the present invention is defined in the following set of claims.

## Claims

1. A method for remotely controlling features of a device in Remote Keyless Entry systems, the method comprising:
a) providing to a device (100) and to a remote keyless entry instrument (200) linked to the device (100) a randomly generated secret key of a certain length, the device (100) and the remote keyless entry instrument (200) including an element configured to get a current time;
b) setting between the device (100) and the remote keyless entry instrument (200) a given frequency channel through which they are going to communicate with each other;
c) computing, by the remote keyless entry instrument (200), upon an activation thereof, a hash value using the secret key and a current remote keyless entry instrument timestamp;
d) sending, by the remote keyless entry instrument (200), to the device (100), over said given frequency channel, the computed hash value along with said remote keyless entry instrument timestamp and with a given feature command to be performed by the device (100);
e) checking, by the device (100), whether a difference between the remote keyless entry instrument timestamp and a current device timestamp is lower than or equal to a threshold and if the received hash value is correct; and
f) if both previous conditions of step e) are true, executing the feature command at the device (100).

2. A method for remotely controlling features of a device in Passive Remote Keyless Entry systems, the method comprising:
a) providing to a device (100) and to a remote keyless entry instrument (200) linked to the device (100) a randomly generated secret key of a certain length, the device (100) and the remote keyless entry instrument (200) including an element configured to get a current time;
b) setting between the device (100) and the remote keyless entry instrument (200) a given frequency channel through which they are going to communicate with each other;
c) sending, by the device (100), a synchronization message to the remote keyless entry instrument (200) over said given frequency channel, the synchronization message being sent upon the device (100) detecting an event and including an identifier of the device (100);
d) at the moment said synchronization message is sent, starting to calculate, by the device (100), a message exchanging time;
e) computing, by the remote keyless entry instrument (200), a hash value using the secret key and a remote keyless entry instrument timestamp, and sending, by the remote keyless entry instrument (200), the computed hash value to the device (100);
f) stopping, by the device (100), the calculation of the message exchanging time as soon as the device (100) receives the computed hash value from the remote keyless entry instrument (200);
g) checking, by the device (100), whether the message exchanging time is lower than or equal to a threshold and if the received hash value is correct; and
h) if both previous conditions of step f) are true, executing a feature command at the device (100).

3. The method of any of previous claims, wherein the hash function comprises a Blake2 hash function, preferably a Blake2s version of said Blake2 hash function.

4. The method of any of previous claims, wherein the randomly generated secret key is a 256-bits key.

5. The method of any of previous claims, wherein said setting of the given frequency channel is performed every certain period of time.

6. The method of claim 2, wherein said event comprises detecting once a handle of the device (100) is triggered.

7. The method of claim 2, wherein said event comprises detecting once the remote keyless entry instrument (200) is within a reading range.

8. The method of claim 2, 6 or 7, wherein the remote keyless entry instrument timestamp comprises an error, the latter being comprised within a range between 10 and 20 seconds.

9. The method of any of previous claims, wherein the device (100) comprises a vehicle, a garage door, a doorbell or an alarm, and wherein the feature command comprises locking/activating or unlocking/deactivating said vehicle, garage door, doorbell or alarm.

10. The method of claim 1, wherein the remote keyless entry instrument (200) is a key fob.

11. The method of claim 2, wherein the remote keyless entry instrument (200) is a passive key fob.

12. A remote keyless entry instrument, comprising:
- one or more physical or virtual buttons;
- an element configured to get a current time;
- a memory to store a randomly generated secret key of a certain length;
- at least one processor to compute, upon an activation of at least one of said buttons, a hash value using the secret key and a current remote keyless entry instrument timestamp; and
- a communication unit to send to a device (100), over a previously set frequency channel, a message including the computed hash value along with said remote keyless entry instrument timestamp and with a given feature command to be performed by the device (100),
such that responsive to the reception of said message, the device (100) can check whether a difference between the remote keyless entry instrument timestamp and a current device timestamp is lower than or equal to a threshold and if the received hash value is correct and execute the feature command if both previous conditions are true.

13. The remote keyless entry instrument of claim 12, being a key fob.

14. A remote keyless entry instrument, comprising:
- one or more physical or virtual buttons;
- an element configured to get a current time;
- a memory to store a randomly generated secret key of a certain length;
- a communication unit to communicate with a device (100) over a previously set frequency channel; and
- at least one processor to compute, upon reception of a synchronization message including an identifier of the device (100), a hash value using the secret key and a current remote keyless entry instrument timestamp,
such that responsive to the reception of a message including said hash value from the remote keyless entry instrument (200), the device (100) can stop calculating a message exchanging time and can check whether the calculated message exchanging time is lower than or equal to a threshold and if the received hash value is correct and execute a feature command if both previous conditions are true.

15. The remote keyless entry instrument of claim 14, being a passive key fob.
